# EUROPÄISCHE PATENTSCHRIFT

(11) **EP 4 559 779 B1**
(45) Veröffentlichungstag und Bekanntmachung des Hinweises auf die Patenterteilung: **25.03.2026**
(21) Anmeldenummer: 24213949.1
(22) Anmeldetag: 19.11.2024
(51) Int. Cl.: B62B 3/00, B62B 5/04

(54) **ROLL-BREMS-VORRICHTUNG FÜR EINEN VERKAUFS- UND TRANSPORTBEHÄLTER**
ROLLER-BRAKE DEVICE FOR A SALES AND TRANSPORT CONTAINER
DISPOSITIF DE FREINAGE À ROULEAU POUR UN CONTENEUR DE VENTE ET DE TRANSPORT

(30) Priorität: 21.11.2023 DE 102023132472
(43) Veröffentlichungstag der Anmeldung: 28.05.2025
(73) Patentinhaber: KESSEBÖHMER HOLDING KG, 49152 Bad Essen (DE)
(72) Erfinder: Harmeyer, Karsten, 49163 Bohmte (DE); Putze, Marko, 49152 Bad Essen (DE); Bick, Jonas, 49179 Ostercappeln (DE); Wischmeyer, Jens, 49152 Bad Essen (DE)
(74) Vertreter: Völler-Blumenroth, Johannes Florian

(56) Entgegenhaltungen:
- CN-A- 116 353 675
- DE-U1- 202014 003 482
- DE-U1- 202014 105 034
- DE-U1- 8 225 647

## Beschreibung

Die Erfindung betrifft eine Roll-Brems-Vorrichtung für einen Verkaufs- und Transportbehälter zur Warenpräsentation. Die Roll-Brems-Vorrichtung umfasst zwei Stützrollen. Jeder der Stützrollen ist ein Klemmteil zugeordnet, das zwischen einer die jeweilige Stützrolle verriegelnden Verriegelungsstellung und einer Freigabestellung verlagerbar ist. In der Freigabestellung ist die Stützrolle drehbar. Jedem Klemmteil ist dabei eine Klemmfeder zugeordnet, über die das Klemmteil mit einer das Klemmteil in die Freigabestellung verlagernde Kraft beaufschlagt ist. Weiterhin umfasst die Roll-Brems-Vorrichtung eine Betätigungsanordnung, die sich zwischen den Stützrollen erstreckt und die um eine Schwenkachse verschwenkbar ist. Die Betätigungsanordnung umfasst jeweils einen Steuernocken, der so ausgebildet ist, dass beim Verschwenken der Betätigungsanordnung um die Schwenkachse die Klemmteile aus der Freigabestellung in die Verriegelungsstellung verlagert wird. Weiterhin ist ein Verkaufs- und Transportbehälter mit einer entsprechenden Roll-Brems-Vorrichtung Gegenstand der Erfindung.

Eine derartige Roll-Brems-Vorrichtung sowie ein Verkaufs- und Transportbehälter mit einer derartigen Roll-Brems-Vorrichtung gemäß dem Oberbegriff des Anspruchs 1 ist aus der DE 20 2014 003 482 U1 bekannt. Die Betätigungsanordnung der Roll-Brems-Vorrichtung umfasst bei der vorbekannten Vorrichtung jeweils einen Torsionsstab für jede der Stützrollen, an denen jeweils ein endseitiger Stellnocken angeordnet ist. Die beiden Torsionsstäbe sind über ein Bedienelement mit einander verbunden und über dieses verschwenkbar.

Aufgabe der vorliegenden Erfindung ist es, diese vorbekannte Roll-Brems-Vorrichtung derart weiterzuentwickeln, dass diese einfacher gefertigt werden kann.

Erfindungsgemäß wird die Aufgabe gemäß Anspruch 1 dadurch gelöst, dass die jeweiligen Steuernocken der Betätigungsanordnung durch einen entsprechend gebogenen Drahtabschnitt ausgebildet sind. Der Erfindung liegt somit die Erkenntnis zugrunde, dass statt der im vorbekannten Stand der Technik auf dem Torsionsstab zu montierenden Steuernocken ein Drahtabschnitt verwendet werden kann, der so gebogen ist, dass er die Steuernocke realisiert. Insbesondere kann in dem Drahtabschnitt hierzu durch Biegen eine insbesondere haken- oder V-förmigen Nase eingebracht sein, die die Steuernocke ausbildet. Der Drahtabschnitt ist in der Betätigungsanordnung dabei im Wesentlichen koaxial mit der Schwenkachse angeordnet. Der als Steuernocke ausgebildete Teil, insbesondere die haken- oder V-förmig Nase, ist aus der Schwenkachse heraus verlagert und kann beim Verschwenken der Betätigungsanordnung um die Schwenkachse auf das jeweils der Steuernocke zugeordnete Klemmteil der zugehörigen Stützrolle einwirken und dieses aus der Freigabestellung in die Verriegelungsstellung verlagern. Eine einen solchen Drahtabschnitt aufweisende Betätigungsanordnung kann einfacher und kostengünstiger gefertigt werden.

Vorzugsweise umfasst die Betätigungsanordnung einen Fußbetätigungsbügel, der aus einem einstückigen und in eine geeignete Form gebogenen Draht gefertigt ist. Der Fußbetätigungsbügel umfasst die die Steuernocken ausbildenden Drahtabschnitte. Beide Drahtabschnitte mit den jeweils einer Stützrolle zugeordneten Steuernocken können somit durch einen einzigen, in eine geeignete Form gebogenen Draht ausgebildet werden, der den Fußbetätigungsbügel ausbildet. Ein derartiger Fußbetätigungsbügel kann einfach gefertigt werden. Durch die Verwendung eines entsprechend ausgebildeten Fußbetätigungsbügels wird die Montage der Betätigungsanordnung vereinfacht, da diese weniger Einzelteile umfasst. Die Fertigung einer entsprechenden Roll-Brems-Vorrichtung wird weiter vereinfacht.

Besonders vorzugsweise ist der Fußbetätigungsbügel durch einen in nur zwei Dimensionen gebogenen Draht ausgebildet. Ein solcher Fußbetätigungsbügel kann unter Verwendung einer 2D-Biegemaschine erstellt werden. Diese ist gegenüber einer 3D-Biegemaschine kostengünstiger. Die Fertigung ist weiter vereinfacht und kostengünstiger möglich. Zudem erstreckt sich ein derart ausgebildeter Fußbetätigungsbügel in einer Ebene, so dass dieser besonders einfach und kostengünstig lagerbar und/oder transportierbar ist. Die Fertigung sowie die Handhabung eines entsprechenden Fußbetätigungsbügels und damit der entsprechend weiterentwickelten Roll-Brems-Vorrichtung ist weiter verbessert. Die Roll-Brems-Vorrichtung kann kostengünstiger gefertigt werden.

Alternativ kann ein solcher, nur zweidimensional gebogener Draht auch als Zwischenprodukt bei der Erstellung einer Roll-Brems-Vorrichtung verwendet werden.

Wenn die Einbausituation der Roll-Brems-Vorrichtung an einem Verkaufs- und Transportbehälter erfordert, dass ein Betätigungsabschnitt des Fußbetätigungsbügels in eine andere Position verbracht wird, kann dies durch einfaches, nachträgliches Umbiegen des zunächst zweidimensional erstellten Fußbetätigungsbügels erfolgen. Dies ist gegenüber eines mittels einer 3D-Biegemaschine dreidimensional gebogenen Fußbetätigungsbügels kostengünstiger möglich.

Bevorzugt umfasst die Roll-Brems-Vorrichtung für jede der beiden Stützrollen jeweils eine Aufnahme, an der die jeweilige Stützrolle sowie die Betätigungsanordnung festgelegt ist. Über derartige Aufnahmen kann die Roll-Brems-Vorrichtung an einem Verkaufs- und Transportbehälter angeordnet werden. Die Aufnahmen werden hierzu mit dem Verkaufs- und Transportbehälter fest verbunden, insbesondere an diesem angeschweißt. Durch die Verwendung entsprechender Aufnahmen kann die Roll-Brems-Vorrichtung auf einfache Weise an einem Verkaufs- und Transportbehälter angeordnet werden.

Vorzugsweise weist die Aufnahme einen Verriegelungsanschlag für die Steuernocke auf. Die Betätigungsanordnung wird zum Verlagern der Klemmteile aus der Freigabestellung in die Verriegelungsstellung um ihre Schwenkachse verschwenkt, wobei die Steuernocken auf die jeweiligen Klemmteile einwirken und diese gegen die durch die jeweilige Klemmfeder aufgebrachte Kraft in die Verriegelungsstellung verbringen. Vorzugsweise wird der Betätigungshebel soweit bewegt, dass die Steuernocken über den unteren Totpunkt der Klemmteile hinwegbewegt werden. Die Verriegelungsanschläge der Aufnahmen sind so angeordnet, dass die Steuernocken zwischen dem Verriegelungsanschlag und dem Klemmteil, dass durch die Klemmfeder mit einer das Klemmteil in die Freigabestellung verlagernden Kraft beaufschlagt ist, festgelegt wird. Die Betätigungsanordnung kann aus dieser Position nicht selbständig um die Schwenkachse zurück verschwenken. Die an dem Verriegelungsanschlag anliegenden Steuernocken halten die Klemmteile in der Verriegelungsstellung. Zum Entriegeln der Roll-Brems-Vorrichtung muss die Betätigungsanordnung durch einen Bediener in die Gegenrichtung verschwenkt werden. Dabei drücken die Steuernocken die Klemmteile wiederum gegen die Kraft der Klemmfedern nach unten. Nachdem der Totpunkt der Klemmteile überwunden ist, werden diese durch die jeweiligen Klemmfedern in die Freigabestellung verlagert und die Roll-Brems-Vorrichtung entriegelt. Hierdurch kann auf einfache und kostengünstige Weise eine zuverlässige Roll-Brems-Vorrichtung gefertigt werden.

Vorzugsweise ist die Aufnahme zumindest zweigeteilt ausgebildet und kann in einen Unterteil sowie in einen Deckel geteilt werden. Insbesondere ist der Unterteil dazu ausgebildet, an einem Verkaufs- und Transportbehälter festgelegt zu werden. Insbesondere kann das Unterteil an einem Verkaufs- und Transportbehälter angeschweißt sein. Durch die Verwendung einer derartigen zweigeteilten Aufnahme kann die Montage der Roll-Brems-Vorrichtung insbesondere an einem Verkaufs- und Transportbehälter vereinfacht werden.

Besonders vorzugsweise weist das Unterteil zwei parallel zueinander angeordnete Schenkel auf, wobei in einem ersten Schenkel eine in ihrer Außenkontur umfänglich geschlossene erste Lagerstelle für die Betätigungsanordnung angeordnet ist. In dem parallelen zweiten Schenkel ist eine der ersten Lagerstelle gegenüberliegend angeordnete zweite Lagerstelle angeordnet. Die Außenkontur der zweiten Lagerstelle ist dabei teilweise geöffnet. Der Deckel weist einen korrespondierenden, die Außenkontur der zweiten Lagerstelle in der Montageposition des Deckels an dem Unterteil ergänzenden Lagerstellenabschnitt auf.

In eine derart ausgebildete Aufnahme kann die Betätigungsanordnung, insbesondere mit dem Drahtabschnitt, in einer Richtung rechtwinklig zur Erstreckung des ersten Schenkels in die erste Lagerstelle eingeführt werden. Durch die umfänglich geschlossene Außenkontur der ersten Lagerstelle wird die Betätigungsanordnung in diesem Schenkel bzw. der ersten Aufnahme sicher gehalten.

Die zweite Lagerstelle weist demgegenüber keine durchgehende Außenkontur auf. Durch die Öffnung in der Außenkontur kann die Betätigungsanordnung einfach in die zweite Lagerstelle eingebracht werden, insbesondere, wenn die Betätigungsanordnung zuvor bereits in die erste Lagerstelle eingebracht wurde. Der Deckel weist einen Lagerstellenabschnitt auf, der die Außenkontur der zweiten Lagerstelle ergänzt. Durch Montage des Deckels an dem Unterteil wird die Aufnahme vervollständigt, wobei der Lagerstellenabschnitt des Deckels die Außenkontur der zweiten Lagerstelle schließt. Hierdurch kann eine derart ausgebildete Roll-Brems-Vorrichtung auf besonders einfache Weise montiert werden.

Insbesondere sind jeweils die zweiten Schenkel der Unterteile der Aufnahmen, die die zweiten Lagerstellen aufweisen, einander zugewandt angeordnet. Die ersten Schenkel mit den ersten Lagerstellen sind entsprechend auf den einander abgewandten Seiten der Unterteile angeordnet. Bei dieser Ausrichtung kann die Betätigungsvorrichtung mit einem Ende in die erste Lagerstelle einer der beiden Aufnahmen eingeführt und soweit durch die Lagerstelle durchgeschoben werden, bis das gegenüberliegende Ende der Betätigungsvorrichtung in die erste Lagerstelle der zweiten Aufnahme eingebracht werden kann. Anschließend wird die Betätigungsvorrichtung wieder so zurückverlagert, dass die Steuernocken korrekt zur Betätigung der Klemmteile ausgerichtet sind. Dabei wird die Betätigungsvorrichtung auch in die jeweiligen zweiten Lagerstellen eingebracht, deren Öffnungen der Außenkonturen hierzu entsprechend ausgerichtet sind. Die Aufnahmen werden anschließend durch Montage der zugehörigen Deckel vervollständigt, wobei die Außenkonturen der jeweiligen zweiten Lagerstellen über den jeweiligen Lagerstellenabschnitt des jeweiligen Deckels ergänzt werden. Auf diese Weise kann die Roll-Brems-Vorrichtung einfach montiert werden.

Weiter besonders vorzugsweise ist die Betätigungsanordnung in den jeweiligen Lagerstellen über als Gleitlager wirkende Buchsen gelagert. Hierzu sind entsprechende Buchsen an der Betätigungsanordnung angeordnet. Diese werden zwischen der jeweiligen Lagerstelle und der Betätigungsanordnung positioniert. Durch die Verwendung von als Gleitlager wirkenden Buchsen wird die Bedienbarkeit der Roll-Brems-Vorrichtung auf einfache Weise verbessert.

Bevorzugt weist der Deckel einen Anschlag auf, der in der montierten Stellung die erste Lagerstelle im zugehörigen Unterteil verdeckt. Durch die Verwendung eines derartigen Anschlags des Deckels der zweigeteilten Aufnahme kann auf besonders einfache Weise erreicht werden, dass die Betätigungsanordnung in einer Richtung parallel zur Schwenkachse korrekt positioniert wird. Dies stellt sicher, dass die Stellnocken richtig zu den jeweiligen Klemmteilen ausgerichtet sind und diese korrekt betätigen können. Die Montage einer entsprechenden Roll-Brems-Vorrichtung ist weiter verbessert.

Vorzugsweise ist an mindestens einer der Aufnahmen eine Rückstellfeder angeordnet, über die die Betätigungsanordnung mit einer die Steuernocken von den Klemmteilen wegschwenkenden Kraft beaufschlagt ist. Diese Rückstellfeder bewirkt, dass die Betätigungsanordnung nicht mit den Steuernocken auf den Klemmteilen aufliegt, wenn die Roll-Brems-Vorrichtung entriegelt ist und sich die Klemmteile in ihrer Freigabestellung befinden.

Insbesondere bewegt die Rückstellfeder die Betätigungsanordnung in eine definierte Position, wenn die Roll-Brems-Vorrichtung an einem Verkaufs- und Transportbehälter angeordnet ist. In dieser Position kann die Betätigungsanordnung an einem weiteren Teil des Verkaufs- und Transportbehälters anliegen.

Besonders vorzugsweise ist an jeder der Aufnahmen eine Rückstellfeder angeordnet. Durch die Verwendung zweier Rückstellfedern, die an jeweils einer der Aufnahmen angeordnet sind, wird diese Funktion auf einfache Weise zuverlässig realisiert.

Weiterhin ist die Erfindung gerichtet auf einen Verkaufs- und Transportbehälter mit einer vorbeschriebenen Roll-Brems-Vorrichtung. Ein solcher Verkaufs- und Transportbehälter weist typischerweise einen aus Gestellstreben gebildeten Gestellrahmen auf. An dem Gestellrahmen können paarweise gegenüberliegende Längs- und Querseitenwände angeordnet sein. Typischerweise sind in einem bodennahen Bereich des Gestellrahmens horizontale Gestellstreben angeordnet. Die Roll-Brems-Vorrichtung mit den Stützrollen wird vorzugsweise an einer solchen horizontalen Gestellstrebe angeordnet. Bei der Verwendung einer Roll-Brems-Vorrichtung mit Aufnahmen können die Aufnahmen an einer solchen horizontalen Gestellstrebe angeschweißt sein.

Weitere Vorteile und Einzelheiten der Erfindung sind der nachfolgenden Figurenbeschreibung mit beispielhaften erfindungsgemäßen Ausbildungen zu entnehmen. In den Figuren zeigt auf schematische Weise
- Fig. 1: einen Ausschnitt einer erfindungsgemäßen Roll-Brems-Vorrichtung an einem Rahmengestell eines Verkaufs- und Transportbehälters mit dem Klemmteil in der Verriegelungsstellung;
- Fig. 2: die Darstellung gemäß Fig. 1 in einer alternativen Ansicht;
- Fig. 3: die Roll-Brems-Vorrichtung an einem Rahmengestell eines Verkaufs- und Transportbehälters mit den Klemmteilen in der Freigabestellung;
- Fig. 4: einen Ausschnitt der Fig. 3;
- Fig. 5: einen Querschnitt durch die Roll-Brems-Vorrichtung der Fig. 3 im Bereich einer Aufnahme;
- Fig. 6: eine Betätigungsanordnung einer Roll-Brems-Vorrichtung;
- Fig. 6a: die Betätigungsanordnung der Fig. 6 in einer Ansicht von der Seite;
- Fig. 7: eine alternative Ausführungsform einer Betätigungsanordnung;
- Fig. 7a: die Betätigungsanordnung der Fig. 7 in einer Ansicht von der Seite;
- Fig. 8: ein Unterteil einer Aufnahme der Roll-Brems-Vorrichtung;
- Fig. 9: einen zugehörigen Deckel der Aufnahme der Roll-Brems-Vorrichtung;
- Fig. 9a: eine Detaildarstellung des Deckels gemäß Fig. 9 im Bereich eines Lagerstellenabschnitts;
- Fig. 10: einen Verkaufs- und Transportbehälter mit daran angeordneter Roll-Brems-Vorrichtung.

Gleich oder ähnlich wirkende Teile sind - sofern dienlich - mit identischen Bezugsziffern versehen. Einzelne technische Merkmale der nachfolgend beschriebenen Ausführungsbeispiele können mit den Merkmalen des Anspruchs 1 sowie mit den Merkmalen einzelner vorbeschriebener Ausführungsbeispiele kombiniert werder Die Erfindung wird durch die Ansprüche definiert.

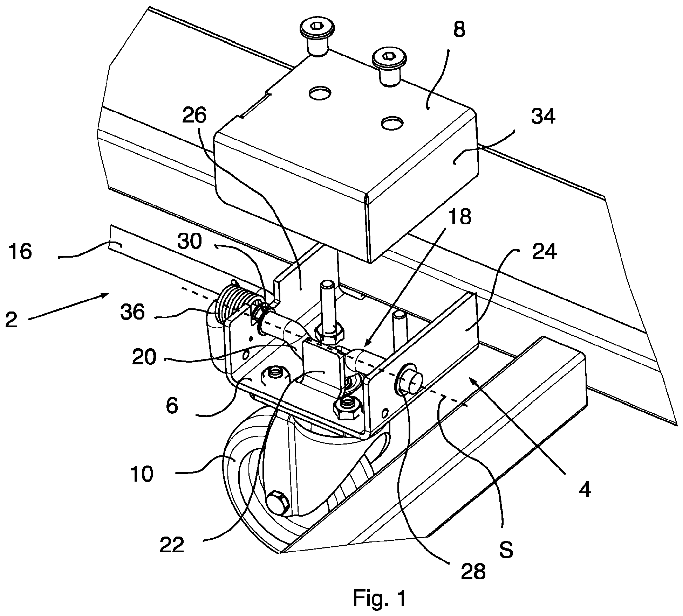

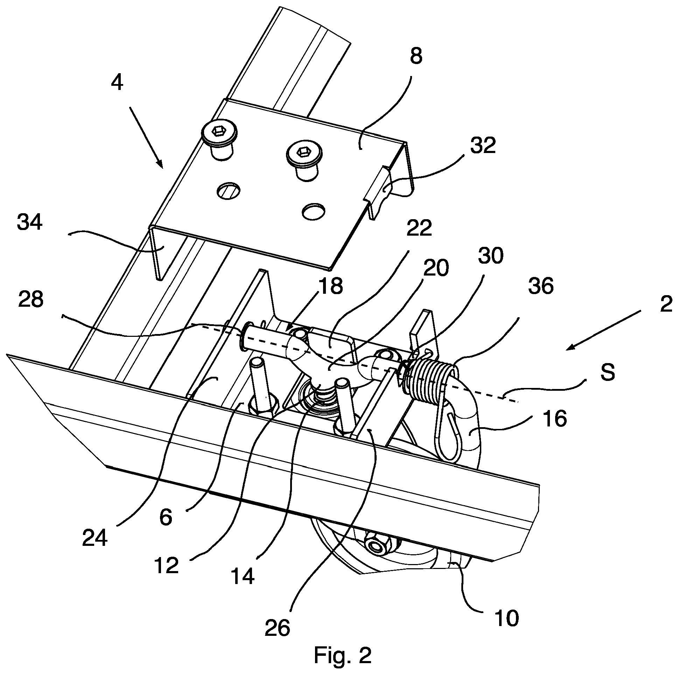

Fig. 1 und Fig. 2 zeigen einen Ausschnitt einer ersten Ausführungsform einer erfindungsgemäßen Roll-Brems-Vorrichtung 2. Dargestellt ist eine Aufnahme 4 mit einem Unterteil 6 und einem Deckel 8 in einer Explosionsdarstellung. An dem Unterteil 6 der Aufnahme 4 ist eine Stützrolle 10 angeordnet. In Fig. 2 ist das der Stützrolle 10 zugeordnete Klemmteil 12 mit der Klemmfeder 14 erkennbar. An der Aufnahme 4 ist die Betätigungsanordnung 16 angeordnet. Diese ist um eine Schwenkachse S schwenkbar. In der Aufnahme 4 ist ein Drahtabschnitt 18 der Betätigungsanordnung 16 angeordnet, der den Steuernocken 20 ausbildet.

In der in Fig. 2 dargestellten Position ist die Betätigungsanordnung 16 so um die Schwenkachse S verschwenkt, dass der Steuernocken 20 das Klemmteil 12 gegen die Kraft der Klemmfeder 14 in die Verriegelungsstellung verlagert. Der Steuernocken 20 ist dabei über den Totpunkt des Klemmteils 12 hinwegbewegt und liegt am Verriegelungsanschlag 22 der Aufnahme 4 an. Der Verriegelungsanschlag 22 ist dabei durch einen entsprechend gebogenen Abschnitt des Unterteils 6 ausgebildet.

Das Unterteil 6 der Aufnahme 4 weist zwei Schenkel 24, 26 auf. Im außen angeordneten ersten Schenkel 24 ist eine erste Lagerstelle 26 angeordnet. Diese ist als ein Loch ausgebildet, das eine umfänglich geschlossene Außenkontur aufweist. Die Betätigungsanordnung 16 ist mit einem Teil des Drahtabschnitts 18 in dieses Loch eingebracht. Die Betätigungsanordnung 16 ist über eine als Gleitlager wirkende Buchse in der ersten Lagerstelle 28 gelagert. Weiterhin ist die Betätigungsanordnung 16 in der zweiten Lagerstelle 30 des zweiten Schenkels 26 gelagert. Diese ist im Ausführungsbeispiel nach oben offen, so dass die Betätigungsanordnung 16 einfach in die zweite Lagerstelle 30 eingebracht werden kann. Der in der Explosionsdarstellung dargestellte Deckel 8 der Aufnahme 4 weist einen Lagerstellenabschnitt 32 auf, der die zweite Lagerstelle 30 im montierten Zustand der Aufnahme 4 vervollständigt. Im dargestellten Ausführungsbeispiel werden das Unterteil 6 und der Deckel 8 über die beiden dargestellten Schrauben miteinander verbunden. Die Betätigungsanordnung 16 ist auch in der zweiten Lagerstelle 30 über eine als Gleitlager wirkende Buchse gelagert.

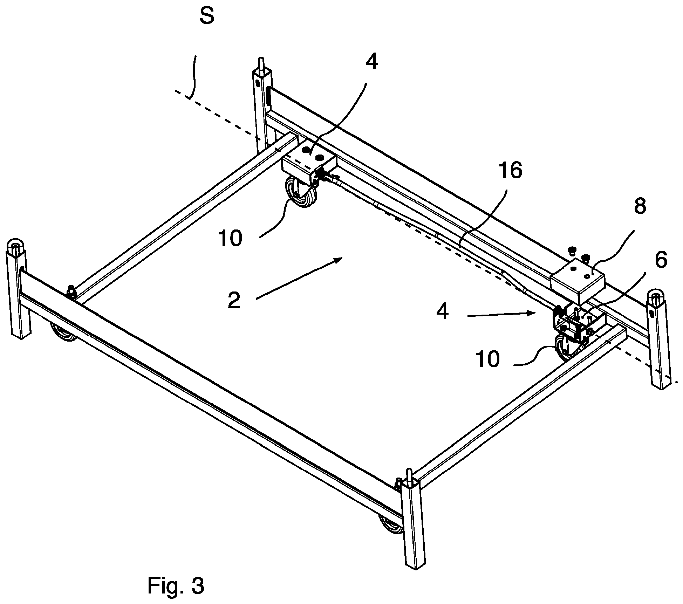

Der Deckel 8 weist zwei Abkantungen auf, von denen eine eine Seite des Unterteils 6 verschließt, an der keiner der Schenkel 24, 26 angeordnet ist. Die andere Abkantung bildet einen Anschlag 34 aus. Dieser begrenzt im montierten Zustand des Deckels 8 an dem Unterteil 6 die Beweglichkeit der Betätigungsanordnung 16 in Richtung der Schwenkachse S. Durch den Anschlag 34 wird der Steuernocken 20 so ausgerichtet, dass dieser mit dem Klemmteil 12 zusammenwirkt. Eine Bewegung der Befestigungsanordnung in Richtung des Anschlags 34 wird verhindert. Eine Bewegung weg von dem Anschlag 34 wird durch die analog ausgestaltete zweite Aufnahme 4 verhindert, die im Bereich der zweiten Stützrolle angeordnet ist und die Betätigungsanordnung in diese Richtung fixiert. Dies ist in der Darstellung gemäß Fig. 3 erkennbar.

An den Aufnahmen 4 ist jeweils eine Rückstellfeder 36 angeordnet, die mit der Betätigungsanordnung 16 derart zusammenwirkt, dass diese mit einer Kraft beaufschlagt wird, die diese von dem Klemmteil 12 wegbewegt, wenn die Betätigungsanordnung das Klemmteil 12 freigibt.

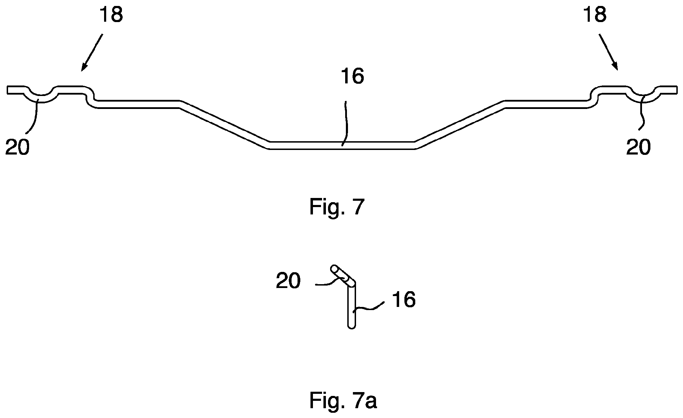

Bei der in Fig. 1 und Fig. 2 dargestellten Roll-Brems-Vorrichtung 2 ist die Betätigungsanordnung 16 durch einen Fußbetätigungsbügel ausgebildet, der in drei Dimensionen gebogen ist. Ein solcher Bügel ist in den Fig. 7 und Fig. 7a dargestellt.

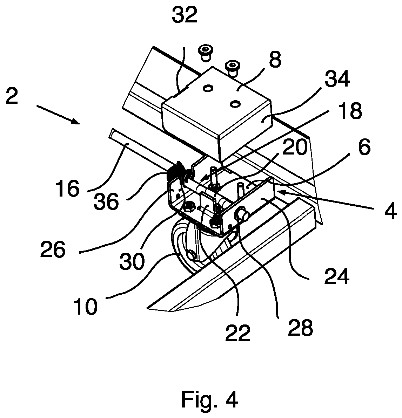

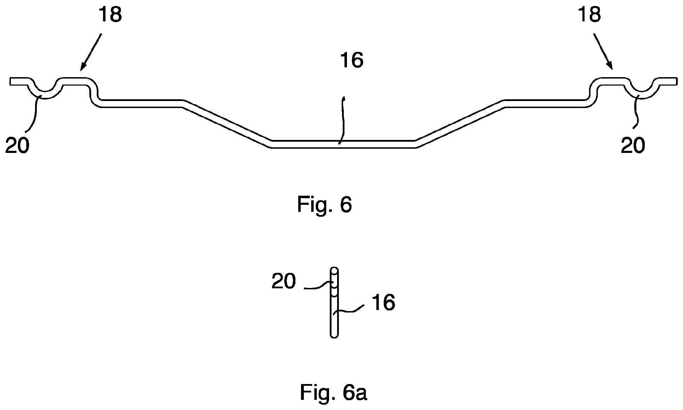

Fig. 3 bis Fig. 5 zeigen ein alternatives Ausführungsbeispiel einer erfindungsgemäßen Roll-Brems-Vorrichtung 2. Der Betätigungsanordnung 16 ist durch einen Fußbetätigungsbügel ausgebildet, der zweidimensional gebogen ist. Ein solcher Fußbetätigungsbügel ist in Fig. 6 und Fig. 6a dargestellt. Er erstreckt sich in der Seitenansicht in einer Ebene. Die Darstellung gemäß Fig. 4 entspricht im Übrigen der Darstellung gemäß Fig. 1.

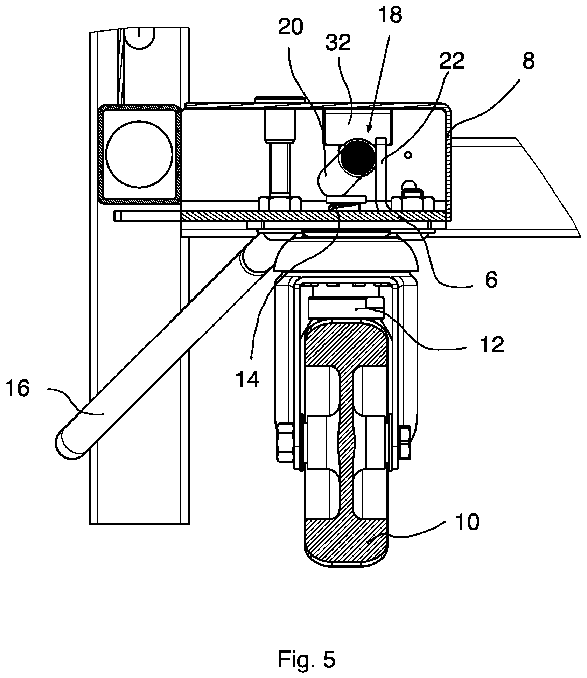

Fig. 5 zeigt einen Querschnitt durch eine Aufnahme 4 der Darstellung gemäß Fig. 3. Fig. 5 lässt erkennen, dass die Betätigungsanordnung 16 durch einen Fußbetätigungsbügel ausgebildet ist, der nur in einer Ebene gebogen ist. Erkennbar sind weiterhin das Klemmteil 12 sowie die Klemmfeder 14, die auf die Stützrolle 10 einwirken. In der Darstellung gemäß Fig. 5 befindet sich das Klemmteil 12 in der Freigabestellung.

Fig. 6 und Fig. 6a zeigen eine als Fußbetätigungsbügel ausgebildete Betätigungsanordnung 16 in einer Aufsicht sowie in einer Seitenansicht. Erkennbar sind die Drahtabschnitte 18 mit den darin ausgebildeten Steuernocken 20. Der in Fig. 6 und Fig. 6a dargestellte Fußbetätigungsbügel ist in nur zwei Dimensionen gebogen und erstreckt sich in einer Ebene. Eine derart ausgebildete Betätigungsanordnung 16 ist einfach und kostengünstig herstellbar.

Die Betätigungsanordnung 16 gemäß den Fig. 7 und 7a ist als dreidimensional gebogener Fußbetätigungsbügel ausgebildet. Zunächst ist auch dieser Fußbetätigungsbügel durch ein Biegen in zwei Dimensionen erstellbar. Die dreidimensionale Biegung kann nachträglich, nach Abschluss der zweidimensionalen Biegung, in den Fußbetätigungsbügel eingebracht werden. Die Herstellung einer derart dreidimensional gebogenen Betätigungsanordnung 16 ist einfach möglich.

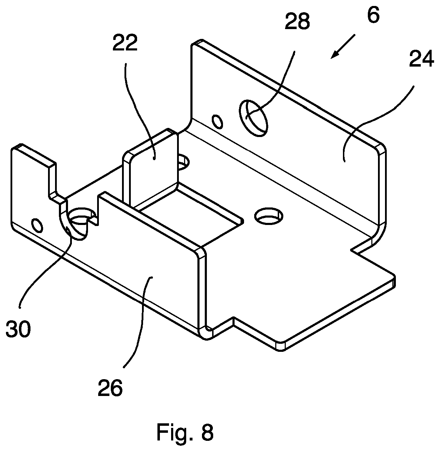

Fig. 8 zeigt ein Unterteil 6 einer Aufnahme 4 mit dem ersten Schenkel 24 und dem parallel zum ersten Schenkel 24 angeordneten zweiten Schenkel 26. Im ersten Schenkel 24 ist die erste Lagerstelle 28 angeordnet. Diese ist durch ein Loch ausgebildet, in das die Betätigungsanordnung 18 einbringbar ist. Im zweiten Schenkel 24 ist die zweite Lagerstelle 30 angeordnet. Diese ist schlitzartig ausgebildet. Dies erleichtert das Einbringen der Betätigungsanordnung 18 in die zweite Lagerstelle 30, insbesondere, wenn die Betätigungsanordnung 18 bereits in die erste Lagerstelle 28 eingebracht ist.

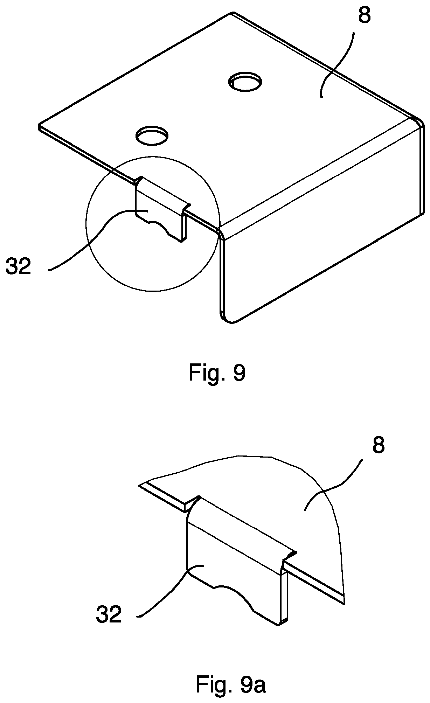

Fig. 9 zeigt einen korrespondierenden Deckel 8 mit dem Lagerstellenabschnitt 32, der in Fig. 9a vergrößert dargestellt ist. Dieser ist ausgebildet, die zweite Lagerstelle 30 zu vervollständigen, wenn der Deckel 8 an dem Unterteil 6 montiert ist.

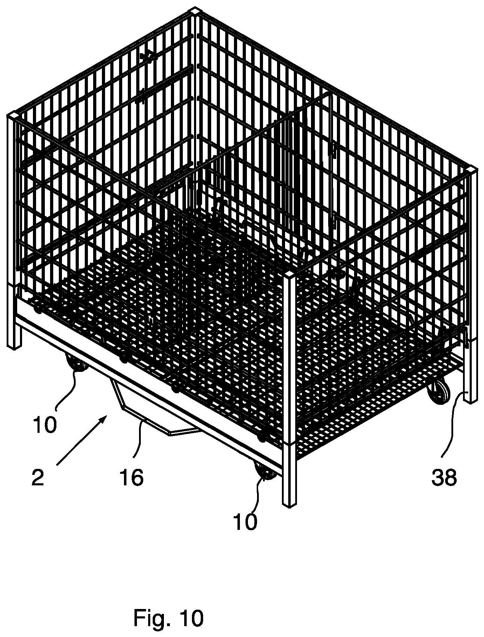

Fig. 10 zeigt einen Verkaufs- und Transportbehälter 38 mit einer Roll-Brems-Vorrichtung 2. Die Roll-Bremseinheit ist in dem dargestellten Ausführungsbeispiel mit den Aufnahmen 4 an einer vorderen, unteren und horizontalen Gestellstrebe eines Rahmengestells des Verkaufs- und Transportbehälters 38 angeordnet. Erkennbar sind von der Roll-Brems-Vorrichtung 2 die beiden Stützrollen 10 sowie die Betätigungsanordnung 16.

## Patentansprüche

1. Roll-Brems-Vorrichtung (2) für einen Verkaufs- und Transportbehälter (38) zur Warenpräsentation, die Roll-Brems-Vorrichtung (2) umfassend zwei Stützrollen (10) , wobei jeder Stützrolle (10) ein Klemmteil (12) zugeordnet ist, das zwischen einer die jeweilige Stützrolle (10) verriegelnden Verriegelungsstellung und einer Freigabestellung verlagerbar ist, wobei jedem Klemmteil (12) eine Klemmfeder (14) zugeordnet ist, über die das Klemmteil (12) mit einer das Klemmteil (12) in die Freigabestellung verlagernden Kraft beaufschlagt ist, sowie eine sich zwischen den Stützrollen (10) ersteckenden Betätigungsanordnung (16), die um eine Schwenkachse (S) verschwenkbar ist und jeweils einen Steuernocken (20) zur Verlagerung der Klemmteile (12) aus der Freigabestellung in die Verriegelungsstellung aufweist, **dadurch gekennzeichnet, dass** die jeweiligen Steuernocken (20) durch einen entsprechend gebogenen Drahtabschnitt (18) der Betätigungsanordnung (16) ausgebildet sind.

2. Roll-Brems-Vorrichtung (2) nach Anspruch 1, **dadurch gekennzeichnet, dass** die Betätigungsanordnung (16) einen aus einem einstückigen und entsprechend gebogenen Draht gefertigten Fußbetätigungsbügel aufweist, der die die Steuernocken (20) ausbildenden Drahtabschnitte (18) umfasst.

3. Roll-Brems-Vorrichtung (2) nach Anspruch 2, **dadurch gekennzeichnet, dass** der Fußbetätigungsbügel durch einen nur in zwei Dimensionen gebogenen Draht ausgebildet ist.

4. Roll-Brems-Vorrichtung (2) nach einem der vorhergehenden Ansprüche, **dadurch gekennzeichnet, dass** die Roll-Brems-Vorrichtung (2) für jede der beiden Stützrollen (10) jeweils eine Aufnahme (4) umfasst, an der die jeweilige Stützrolle (10) sowie die Betätigungsanordnung (16) festgelegt ist.

5. Roll-Brems-Vorrichtung (2) nach Anspruch 4, **dadurch gekennzeichnet, dass** die Aufnahme (4) einen Verriegelungsanschlag (22) für die Steuernocke (20) aufweist.

6. Roll-Brems-Vorrichtung (2) nach Anspruch 4 oder 5, **dadurch gekennzeichnet, dass** die Aufnahme (4) in ein Unterteil (6) sowie einen Deckel (8) teilbar ist.

7. Roll-Brems-Vorrichtung (2) nach Anspruch 6, **dadurch gekennzeichnet, dass** das Unterteil (6) zwei parallel zueinander angeordnete Schenkel (24, 26) aufweist, wobei in einem Schenkel (24) eine in ihrer Außenkontur umfänglich geschlossene erste Lagerstelle (28) für die Betätigungsanordnung (16) sowie in dem parallelen Schenkel (26) eine der ersten Lagerstelle (28) gegenüberliegend angeordnete zweite Lagerstelle (30) angeordnet sind, wobei die Außenkontur der zweiten Lagerstelle (30) in zumindest eine Richtung geöffnet ist, wobei der Deckel (8) einen korrespondierenden, die Außenkontur der zweiten Lagerstelle (30) ergänzenden Lagerstellenabschnitt (32) aufweist.

8. Roll-Brems-Vorrichtung (2) nach Anspruch 7, **dadurch gekennzeichnet, dass** die Betätigungsanordnung (16) in der ersten und zweiten Lagerstelle (28, 30) über als Gleitlager wirkende Buchsen gelagert ist.

9. Roll-Brems-Vorrichtung (2) nach Anspruch 7 oder 8, **dadurch gekennzeichnet, dass** der Deckel (8) einen in der montierten Stellung die erste Lagerstelle (28) im zugehörigen Unterteil (6) verdeckenden Anschlag (34) aufweist.

10. Roll-Brems-Vorrichtung (2) nach einem der Ansprüche 4 bis 9, **dadurch gekennzeichnet, dass** an mindestens einer der Aufnahmen (4) eine Rückstellfeder (36) angeordnet ist, über die die Betätigungsanordnung (16) mit einer die Steuernocken (20) von den Klemmteilen (12) wegschwenkenden Kraft beaufschlagt ist.

11. Verkaufs- und Transportbehälter mit einer Roll-Brems-Vorrichtung (2) nach einem der Ansprüche 1 bis 10.

## Claims

1. Roll-brake device (2) for a sales and transport container (38) for displaying goods, the roll-brake device (2) comprising two support rollers (10), wherein each support roller (10) is assigned a clamping part (12) which is movable between a locking position locking the respective support roller (10) and a release position, wherein each clamping part (12) is assigned a clamping spring (14) via which the clamping part (12) is subjected to a force which moves the clamping part (12) into the release position, and an actuating arrangement (16) extending between the support rollers (10), which actuating arrangement (16) is pivotable around a pivot axis (S) and has a respective control cam (20) for moving the clamping parts (12) from the release position into the locking position, **characterized in that** the respective control cams (20) are formed by a correspondingly bent wire section (18) of the actuating arrangement (16).

2. Roll-brake device (2) according to claim 1, **characterized in that** the actuating arrangement (16) has a foot actuating lever made from a one-piece and correspondingly bent wire, which foot actuating lever comprises the wire sections (18) forming the control cams (20).

3. Roll-brake device (2) according to claim 2, **characterized in that** the foot actuating lever is formed by a wire bent only in two dimensions.

4. Roll-brake device (2) according to one of the preceding claims, **characterized in that** the roll-brake device (2) comprises, for each of the two support rollers (10), a respective receptacle (4) to which the respective support roller (10) and the actuating arrangement (16) are fixed.

5. Roll-brake device (2) according to claim 4, **characterized in that** the receptacle (4) has a locking stop (22) for the control cam (20).

6. Roll-brake device (2) according to claim 4 or 5, **characterized in that** the receptacle (4) can be divided into a lower part (6) and a cover (8).

7. Roll-brake device (2) according to claim 6, **characterized in that** the lower part (6) has two legs (24, 26) arranged parallel to each other, wherein a first bearing point (28) for the actuating arrangement (16), which is circumferentially closed **in** its outer contour, is arranged in one leg (24), and a second bearing point (30) is arranged in the parallel leg (26), which is arranged opposite the first bearing point (28), wherein the outer contour of the second bearing point (30) is open **in** at least one direction, wherein the cover (8) has a corresponding bearing point section (32) which complements the outer contour of the second bearing point (30).

8. Roll-brake device (2) according to claim 7, **characterized in that** the actuating arrangement (16) is mounted in the first and second bearing points (28, 30) via bushings acting as slide bearings.

9. Roll-brake device (2) according to claim 7 or 8, **characterized in that** the cover (8) has a stop (34) which covers the first bearing point (28) **in** the associated lower part (6) in the mounted position.

10. Roll-brake device (2) according to one of claims 4 to 9, **characterized in that** a return spring (36) is arranged on at least one of the receptacles (4), via which return spring (36) the actuating arrangement (16) is subjected to a force pivoting the control cams (20) away from the clamping parts (12).

11. Sales and transport container with a roll-brake device (2) according to one of claims 1 to 10.

## Revendications

1. Dispositif de freinage à rouleaux (2) pour un conteneur de vente et de transport (38) destiné à la présentation de marchandises, le dispositif de freinage à rouleaux (2) comprenant deux rouleaux d'appui (10), une pièce de serrage (12), qui peut être déplacée entre une position de verrouillage verrouillant le rouleau d'appui (10) respectif et une position de déverrouillage, étant associée à chaque rouleau d'appui (10), un ressort de serrage (14) étant associé à chaque pièce de serrage (12), par lequel la pièce de serrage (12) est soumise à l'action d'une force déplaçant la pièce de serrage (12) dans la position de déverrouillage, et un ensemble d'actionnement (16) s'étendant entre les rouleaux d'appui (10), qui peut être pivoté autour d'un axe de pivotement (S) et comporte respectivement une came de commande (20) pour déplacer les pièces de serrage (12) de la position de déverrouillage dans la position de verrouillage, **caractérisé en ce que** les cames de commande (20) respectives sont formées par une section de fil métallique (18) courbée de manière correspondante de l'ensemble d'actionnement (16).

2. Dispositif de frein à rouleaux (2) selon la revendication 1, **caractérisé en ce que** l'ensemble d'actionnement (16) comporte un étrier d'actionnement de pied fabriqué à partir d'un fil métallique d'un seul tenant et plié de manière correspondante, qui comprend les sections de fil métallique (18) formant les cames de commande (20).

3. Dispositif de frein à rouleaux (2) selon la revendication 2, **caractérisé en ce que** l'étrier d'actionnement de pied est formé par un fil métallique plié seulement dans deux dimensions.

4. Dispositif de frein à rouleaux (2) selon l'une des revendications précédentes, **caractérisé en ce que** le dispositif de frein à rouleaux (2) comprend, pour chacun des deux rouleaux d'appui (10), respectivement un logement (4), sur lequel sont fixés le rouleau d'appui (10) respectif et l'ensemble d'actionnement (16).

5. Dispositif de frein à rouleaux (2) selon la revendication 4, **caractérisé en ce que** le logement (4) comporte une butée de verrouillage (22) pour la came de commande (20).

6. Dispositif de frein à rouleaux (2) selon la revendication 4 ou 5, **caractérisé en ce que** le logement (4) peut être divisé en une pièce inférieure (6) et en un couvercle (8).

7. Dispositif de frein à rouleaux (2) selon la revendication 6, **caractérisé en ce que** la pièce inférieure (6) comporte deux branches (24, 26) disposées parallèlement l'une à l'autre, un premier emplacement de support (28) fermé en périphérie sur son contour extérieur pour l'ensemble d'actionnement (16) étant disposé dans une branche (24) et un deuxième emplacement de support (30) opposé au premier emplacement de support (28) étant disposé dans la branche parallèle (26), le contour extérieur du deuxième emplacement de support (30) étant ouvert dans au moins une direction, le couvercle (8) comportant une section (32) d'emplacement de support correspondante complétant le contour extérieur du deuxième emplacement de support (30).

8. Dispositif de frein à rouleaux (2) selon la revendication 7, **caractérisé en ce que** l'ensemble d'actionnement (16) est monté dans le premier et le deuxième emplacement de support (28, 30) par des douilles servant de paliers lisses.

9. Dispositif de frein à rouleaux (2) selon la revendication 7 ou 8, **caractérisé en ce que** le couvercle (8) comporte une butée (34) dissimulant, dans la position de montage, le premier emplacement de support (28) dans la pièce inférieure (6) associée.

10. Dispositif de frein à rouleaux (2) selon l'une des revendications 4 à 9, **caractérisé en ce qu'**un ressort de rappel (36) est disposé sur au moins un des logements (4), par lequel l'ensemble d'actionnement (16) est soumis à l'action d'une force éloignant par pivotement les cames de commande (20) des pièces de serrage (12).

11. Conteneur de vente et de transport avec un dispositif de freinage à rouleaux (2) selon l'une des revendications 1 à 10.
